# EUROPEAN PATENT APPLICATION

(11) **EP 1 892 962 A2**
(43) Date of publication of application: **27.02.2008**
(21) Application number: 07110100.0
(22) Date of filing: 12.06.2007
(51) Int. Cl.: H04N 7/173

(54) **Apparatus and method for transmitting and receiving broadcasting guide information using user information**

(30) Priority: 21.08.2006 KR 20060079048
(71) Applicant: Samsung Electronics Co., Ltd., Suwon-si, Gyeonggi-Do (KR)
(72) Inventor: Lee, Kyung-Shin c/o SAMSUNG ELECTRONICS CO., LTD., Suwon-si, Gyeonggi-do (KR); Jeon, Jin-Woo c/o SAMSUNG ELECTRONICS CO., LTD., Suwon-si, Gyeonggi-do (KR); Han, Young-Seop c/o SAMSUNG ELECTRONICS CO., LTD., Suwon-si, Gyeonggi-do (KR); Kim, Young-Jip c/o SAMSUNG ELECTRONICS CO., LTD., Suwon-si, Gyeonggi-do (KR)
(74) Representative: Zimmer, Franz-Josef

(57) **Abstract**

An apparatus and a method for transmitting differentiated available broadcasting guide information to users based on user information are provided. The method includes connecting to the mobile terminal through a bi-directional channel in response to a request from the mobile terminal, determining if a request for available service guide information from the mobile terminal has been received through the bi-directional channel, if a request for available service guide information from the mobile terminal has been received, generating available service guide information by selecting only information to be provided to a user of the mobile terminal from the entire service guide information based on user information, and transmitting the available service guide information to the mobile terminal.

## Description

The present invention relates to technology for providing broadcasting guide information in a broadcasting service for a mobile terminal in a digital broadcasting service system. More particularly, the present invention relates to an apparatus and a method for transmitting only differentiated broadcasting service guide information available for a user based on user information, and a mobile terminal and a method for receiving the information.

Broadcasting services for mobile terminals, such as Digital Multimedia Broadcasting (DMB) or Digital Video Broadcasting-Handheld (DVB-H), transmit broadcasting guide information, such as an Electronic Service Guide (ESG) or an Electronic Program Guide (EPG) of DMB, to provide detailed information regarding the services. The broadcasting information may be broadcasted through a broadcasting network or may be transmitted to each individual through a communication network, for example, through a bi-directional channel, so as to transfer only specified information for the individual. That is, a user may receive the broadcasted guide information to get entire service guide information, or a user may select a particular field or particular content that the user is interested in and receive information regarding the selected field or content to get partial guide information.

The transmitted service guide information may include a significant amount of data. Further, the more channels there are, the larger the amount of transmitted data. Therefore, a large amount of time is required to receive and analyze, and then present data to users.

Accordingly, the present invention has been made to address the above-mentioned problems and/or disadvantages, and the object of the present invention is to provide an apparatus and a method for transmitting differentiated available broadcasting guide information to users based on user information.

This object is solved by the subject matter of the independent claims.

Preferred embodiments are defined in the dependent claims.

An aspect of the present invention is to provide a mobile terminal and a method for receiving available service guide information from a broadcasting guide information transmitting apparatus which transmits differentiated available broadcasting guide information (available service guide information) to users based on user information.

In accordance with an aspect of the present invention, an apparatus for transmitting broadcasting guide information for a digital broadcasting service is provided. The apparatus comprises a memory for storing user information, a guide information generator for generating entire service guide information, a controller for detecting a channel connection with a mobile terminal and generating available service guide information which is selected from the entire service guide information based on user information, and a network connector for communicating with the mobile terminal through the channel.

In accordance with another aspect of the present invention, a mobile terminal for receiving broadcasting guide information from a broadcasting guide information transmitting apparatus for a digital broadcasting service is provided. The mobile terminal comprises a controller for transmitting a request for bi-directional channel connection to the broadcasting guide information transmitting apparatus and for transmitting a request for available service guide information through a connected bi-directional channel when an available service guide mode has been set, a Radio Frequency (RF) transmitting unit for transmitting signals for the requests to the broadcasting guide information transmitting apparatus and receiving entire service guide information or the available service guide information, and a user interface for receiving a selection of an entire service guide mode or an available service guide mode by a user.

In accordance with another aspect of the present invention, a method for transmitting broadcasting guide information to a mobile terminal by a broadcasting guide information transmitting apparatus of a server for a digital broadcasting service is provided. The method comprises connecting to the mobile terminal through a bi-directional channel in response to a request from the mobile terminal, determining if a request for available service guide information from the mobile terminal has been received through the bi-directional channel, generating available service guide information by selecting only information to be provided to a user of the mobile terminal from the entire service guide information based on user information if a request for available service guide information from the mobile terminal has been received, and transmitting the available service guide information to the mobile terminal.

In accordance with another aspect of the present invention, a method for receiving broadcasting guide information from a broadcasting guide information transmitting apparatus of a server for a digital broadcasting service by a mobile terminal is provided. The method comprises determining if an available service guide mode has been set, transmitting a request for bi-directional channel connection to the broadcasting guide information transmitting apparatus if the available service guide mode has been set, transmitting a request for available service guide information through a connected bi-directional channel, receiving the available service guide information generated based on user information from the broadcasting guide information transmitting apparatus, and outputting the received available service guide information.

Other aspects, advantages, and salient features of the invention will become apparent to those skilled in the art from the following detailed description, which, taken in conjunction with the annexed drawings, discloses exemplary embodiments of the invention.

The above and other aspects, features and advantages of certain exemplary embodiments of the present invention will be more apparent from the following detailed description taken in conjunction with the accompanying drawings, in which:
FIG. 1 is a block diagram illustrating the structure of an apparatus for transmitting broadcasting guide information by using user information and a mobile terminal for receiving broadcasting guide information according to an exemplary embodiment of the present invention;
FIG. 2 is a diagram illustrating a screen for service guide setup according to an exemplary embodiment of the present invention;
FIG. 3 is a flowchart illustrating a method for receiving available service guide information by using user information by a mobile terminal according to an exemplary embodiment of the present invention; and
FIG. 4 is a flowchart illustrating a method for transmitting available service guide information by using user information by a broadcasting guide information transmitting apparatus according to an exemplary embodiment of the present invention.

Throughout the drawings, like reference numerals will be understood to refer to like parts, components and structures.

The following description with reference to the accompanying drawings is provided to assist in a comprehensive understanding of the exemplary embodiments of the invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention. Also, descriptions of well-known functions and constructions are omitted for clarity and conciseness.

According to certain exemplary embodiments of the present invention, it is possible to receive guide information about only the services available for a user, instead of receiving the entire service guide information of the broadcasting service. In an exemplary implementation of the present invention, an identifier (ID) or other information regarding a user, which can be obtained from a smart card, such as a Subscriber Identification Module (SIM), may be used, or user information registered in the service provider may be obtained using the ID, in order to select service guide information available for the user. That is, it is possible to transmit specified guide information for a user instead of guide information classified according to contents of the service data.

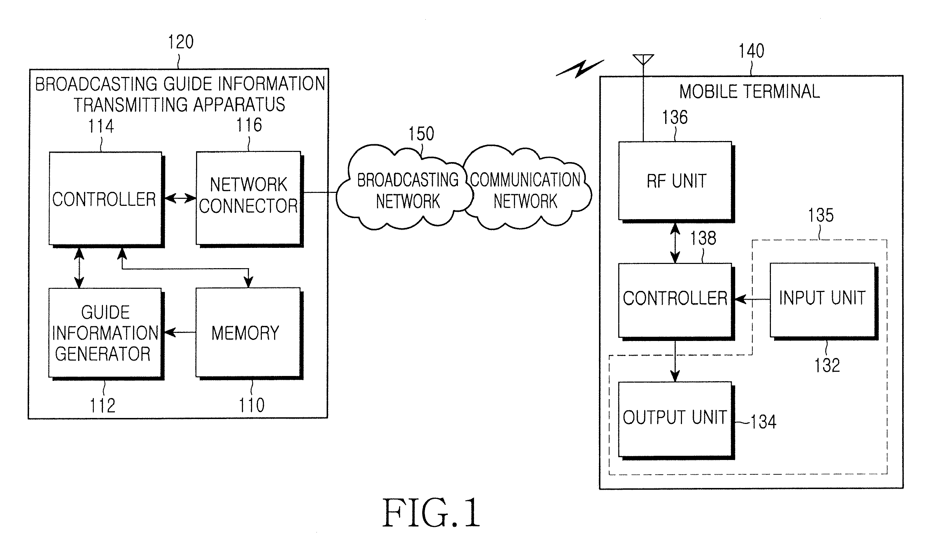

FIG. 1 is a block diagram illustrating the structure of an apparatus for transmitting broadcasting guide information by using user information and a mobile terminal for receiving the broadcasting guide information according to an exemplary embodiment of the present invention.

Usually, a digital broadcasting server converts broadcasting content provided by various content providers according to corresponding broadcasting standards, for example, Digital Video Broadcasting-Handheld (DVB-H), and broadcasts the converted content through internet protocol platforms allocated to content providers and channels in each internet protocol platform, thereby providing a corresponding broadcasting service.

A broadcasting guide information transmitting apparatus 120 of the digital broadcasting server, such as a DVB-H transmission server, includes a memory 110 for storing user information provided by a user to join the broadcasting service, a guide information generator 112 for generating entire service guide information, a controller 114 for detecting a channel connection between the server and a mobile terminal and generating available service guide information by selecting only the information to be provided to a user of the mobile terminal from the entire service guide information based on the user information, and a network connector 116 for communicating with the mobile terminal through the channel 150. According to the present exemplary embodiment, the network connector 116 is connected to a DVB-H network. The broadcasting guide information includes the types of the broadcasting services and various types of information necessary in order to receive the broadcasting service, for example, a protocol address, chargeable service-related information, and the like.

A mobile terminal 140 for receiving the broadcasting guide information from the broadcasting guide information transmitting apparatus 120 of the digital broadcasting server includes a user interface 135, a RF unit 136, and a controller 138. The controller 138 requests the broadcasting guide information transmitting apparatus 120 to make a bi-directional channel connection and requests available service guide information through the connected bi-directional channel 150 when an available service guiding mode has been set. The RF unit 136 transmits signals for the request to the broadcasting guide information transmitting apparatus 120 and receives either the entire or the available service guide information from the broadcasting guide information transmitting apparatus 120. The user interface 135 allows a user to select between the entire service guide mode and the available service guide mode and outputs the received entire or available service guide information to the user.

The user interface 135 includes an output unit 134 for displaying a screen for setting the entire service guide mode or the available service guide mode and an input unit 132 for receiving a user's selection between the entire service guide mode and the available service guide mode. The output unit 134 may display a screen for outputting of the received entire or available service guide information. Further, the output unit 134 may have available signals, such as an output guide voice, by which the user can select the entire service guide mode or the available service guide mode.

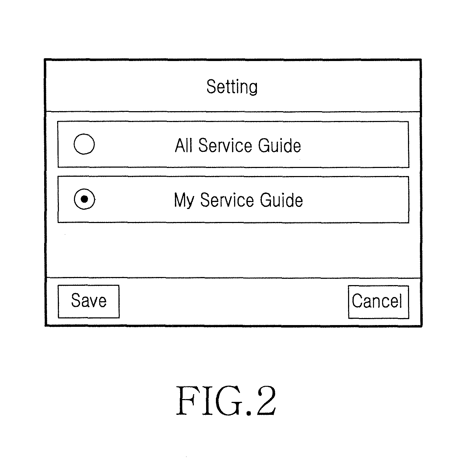

FIG. 2 is a diagram illustrating a screen for service guide setup by a mobile terminal that receives broadcasting guide information by using user information according to an exemplary embodiment of the present invention.

A user can view a screen as illustrated in FIG. 2 and can press a corresponding key in the screen to select the entire service guide (all service guide) mode or the available service guide (my service guide) mode. After the selection, the user can press the "save" key. To exit the screen, the user can press the "cancel" key.

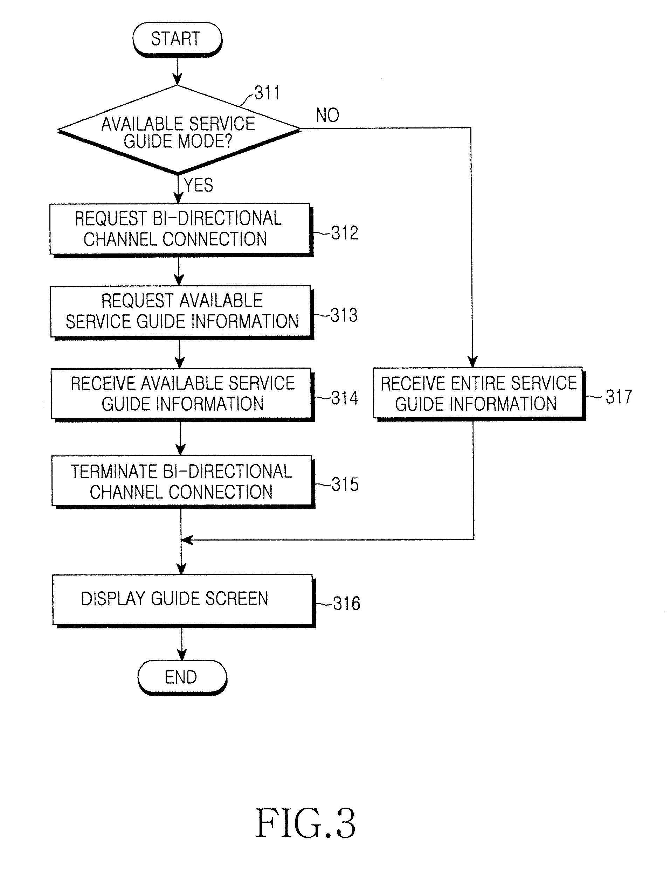

FIG. 3 is a flowchart illustrating a method for receiving available service guide information by using user information by a mobile terminal according to an exemplary embodiment of the present invention.

It is assumed that a user is a subscriber for receiving a mobile multimedia service. Further, it is assumed that the user does not want to receive the guide information for all services but wants to receive only guide information for services available to the user. Under these assumptions, it is expected that the user may change the setup as shown in FIG. 2 in the user's mobile terminal before receiving the guide information.

When the mobile terminal 140 is turned on, it is determined in step 311 if the available service guide mode has been set. If the available service guide mode has been set, the mobile terminal 140 makes a request for a bi-directional channel connection to the broadcasting guide information transmitting apparatus in step 312. That is, to receive the service guide information, the mobile terminal connects with a particular service provider.

When the bi-directional channel connection has been established, the mobile terminal 140 makes a request for available service guide information through the connected bi-directional channel in step 313. Then, in step 314, the mobile terminal receives the available service guide information from the broadcasting guide information transmitting apparatus 120. The available service guide information corresponds to information particularly selected for the user from the entire service guide information based on the user information by the broadcasting guide information transmitting apparatus 120.

After receiving the available service guide information, the mobile terminal terminates the bi-directional channel connection in step 315. Then, in step 316, to provide the available service guide information to the user, the mobile terminal displays the guide screen.

Alternatively, if it is determined in step 311 that the available service guide mode has not been set, the mobile terminal 140 proceeds to step 317, in which the mobile terminal receives the entire service guide information. Then, the mobile terminal proceeds to step 316, in which the mobile terminal displays the guide screen.

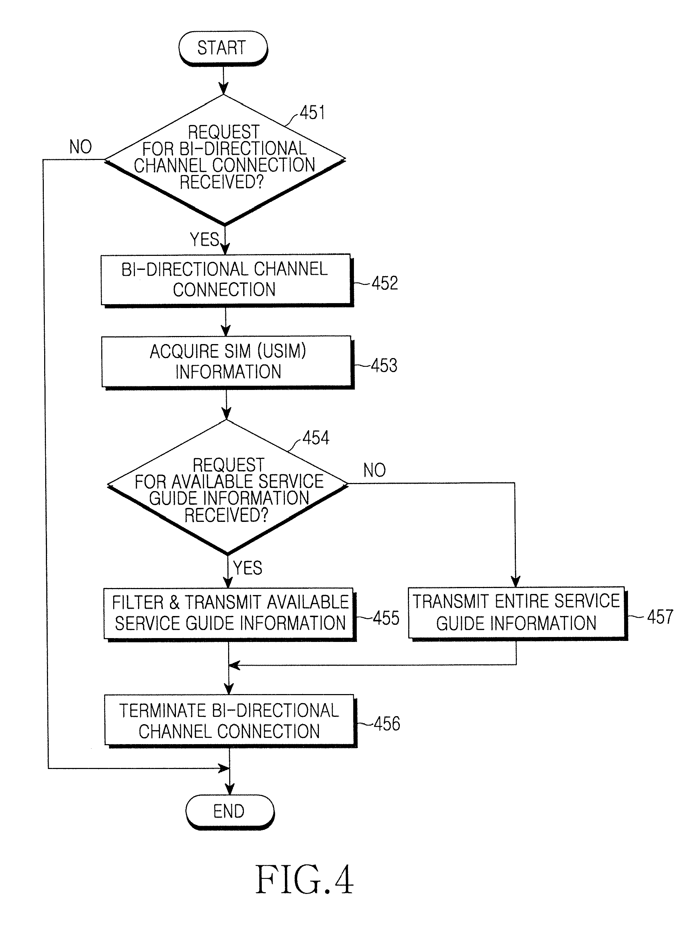

FIG. 4 is a flowchart illustrating a method for transmitting available service guide information by using user information by a broadcasting guide information transmitting apparatus according to an exemplary embodiment of the present invention.

In step 451, the broadcasting guide information transmitting apparatus 120 determines if a request for a bi-directional channel connection has been received. If a request for a bi-directional channel connection has been received, the broadcasting guide information transmitting apparatus 120 establishes a bi-directional channel connection in step 452. Further, in step 453, the broadcasting guide information transmitting apparatus 120 acquires information from the SIM or a Universal Subscriber Identity Module USIM of the mobile terminal 140 through the connected bi-directional channel. Then, in step 454, the broadcasting guide information transmitting apparatus 120 determines if a request for available service guide information has been received. If a request for available service guide information has been received, the broadcasting guide information transmitting apparatus 120 generates available service guide information by selecting only the information to be provided to the user from the entire service guide information based on the user information, and then transmits the generated available service guide information in step 455. Then, in step 456, the broadcasting guide information transmitting apparatus 120 terminates the bi-directional channel connection.

In step 454, if a request for available service guide information has not been received, the broadcasting guide information transmitting apparatus 120 transmits the entire service guide information in step 457. Then, in step 456, the broadcasting guide information transmitting apparatus 120 terminates the bi-directional channel connection.

Hereinafter, the information used when the broadcasting guide information transmitting apparatus 120 generates available service guide information by selecting only the information to be provided to the user in step 455 (that is, information serving as a condition for the selection) will be described in greater detail.

When a user joins a mobile broadcasting service, information about the user is registered in and managed by a server of a corresponding communication service provider. Further, when a channel to the mobile terminal 140 has been established, a server or the broadcasting guide information transmitting apparatus 120 can get various types of information, such as identification information and location of the user, by using information regarding various IDs stored in the SIM or USIM of the mobile terminal 140. That is to say, the broadcasting guide information transmitting apparatus 120 can obtain information relating to purchases of the user, age and location of the user, the type of the terminal, and the like by analyzing ID information received from the mobile terminal 140.

Purchase information regarding the user can be obtained from either an International Mobile Subscriber Identifier (IMSI) included in the SIM, USIM or other IDs. For example, the purchase information can be used to select only the service which the user can use without extra charge. The user's age can be obtained from the IMSI included in the SIM, USIM or other IDs, and different services according to recommended ages may be provided by using the age obtained from the user information registered in the server of the service provider. For example, it is possible to determine whether to provide a service by comparing the obtained age with a minimum allowed age. The current location information can be obtained from either a current Location Area Identity (LAI) included in the SIM, USIM, a network ID or a cell ID in the case of DVB-H, and can be then used to provide different location information, such as local traffic information, and the like according to the obtained location information. That is, it is possible to select and show a service provided to only a particular area. The type of the terminal can be determined from the information registered at the time of joining the service or recorded in the SIM or USIM. Some types of terminals can provide entire services, while other types of terminals cannot provide entire services. Therefore, based on the characteristics (performance) of the terminal, it is possible to select and provide only the services supportable by the terminal. If different guide information is provided according to the characteristics (performance) of the terminal, a user does not receive unnecessary guide information, thereby, increasing user convenience and assuring efficient information transmission. For example, in the case of terminals, which can provide video and audio services but cannot provide a data service, a service provider can select and provide only service guide information relating to video and audio services.

According to the setup, all information (including purchase, age, location, terminal type, and the like) or part of the information (for example, age) can be used as a selective condition for generating available service guide information.

As described above, the service guide information may include any type of information capable of providing differentiated service guide information, as well as the information possessed by the user or the information acquired from the SIM or USIM.

According to an exemplary embodiment of the present invention, a particular term, a particular genre, particular actor information, and the like may be used as selective conditions for generating available service guide information. However, this selective information is based on the content of the guide rather than the user, such as the age information or the location information.

According to certain exemplary embodiments of present invention as described above, when a user wants only guide information about services which the user can currently use, the user can request the guide information to a service provider, and the service provider can selectively provide the guide information by using currently stored user information. Therefore, it is possible to reduce a cumbersome procedure for setting various selecting conditions and receive specified guide information for users.

Certain aspects of the present invention can also be embodied as computer readable code on a computer readable recording medium. A computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

While the invention has been shown and described with reference to certain exemplary embodiments thereof, it will be understood by those skilled in the art that various changes in form and details may be made therein without departing from the scope of the invention as defined by the appended claims.

## Claims

1. An apparatus for transmitting broadcasting guide information for a digital broadcasting service, the apparatus comprising:
a memory for storing user information;
a guide information generator for generating entire service guide information; a controller for detecting a channel connection with a mobile terminal and
generating available service guide information which is selected from the entire service guide information based on user information; and
a network connector for communicating with the mobile terminal through the channel connection.

2. The apparatus as claimed in claim 1, wherein the user information is provided by the user.

3. The apparatus as claimed in claim 1, wherein the user information is received from the mobile terminal.

4. The apparatus as claimed in claim 3, wherein the user information is stored in a smart card of the mobile terminal.

5. The apparatus as claimed in claim 4, wherein the smart card comprises a SIM or a USIM.

6. The apparatus as claimed in one of claims 1 to 5, wherein the available service guide information is generated by using all or part of the user information.

7. A mobile terminal for receiving broadcasting guide information from a broadcasting guide information transmitting apparatus of a server for a digital broadcasting service, the mobile terminal comprising:
a controller for transmitting a request for bi-directional channel connection to the broadcasting guide information transmitting apparatus and transmitting a request for available service guide information through a connected bi-directional channel;
a transmitting unit for transmitting signals for the requests to the broadcasting guide information transmitting apparatus and receiving entire service guide information or the available service guide information; and
a user interface for receiving an entire service guide mode or an available service guide mode by a user.

8. The mobile terminal as claimed in claim 7, wherein the transmitting unit comprises a radio frequency unit.

9. The mobile terminal as claimed in claim 7 or 8, wherein the user interface outputs the received entire service guide information or the available service guide information to the user.

10. The mobile terminal as claimed in claim 9, wherein the user interface comprises:
an output unit for displaying a screen so that the user can select the entire service guide mode or the available service guide mode; and
an input unit for receiving a user's selection of the entire service guide mode or the available service guide mode.

11. The mobile terminal as claimed in claim 9, wherein the user interface comprises an output unit that displays a screen for outputting the received entire service guide information or available service guide information.

12. The mobile terminal as claimed in claim 9, wherein the user interface comprises:
an output unit for outputting an audible signal so that the user can select the entire service guide mode or the available service guide mode; and
an input unit for receiving a user's selection of the entire service guide mode or the available service guide mode.

13. A method for transmitting broadcasting guide information to a mobile terminal by a broadcasting guide information transmitting apparatus for a digital broadcasting service, the method comprising the steps of:
connecting to the mobile terminal through a bi-directional channel in response to a request from the mobile terminal;
determining if a request for available service guide information from the mobile terminal has been received through the bi-directional channel;
generating available service guide information by selecting information to be provided to a user of the mobile terminal from the entire service guide information based on user information if a request for available service guide information from the mobile terminal is received; and
transmitting the available service guide information to the mobile terminal.

14. A method for receiving broadcasting guide information by a mobile terminal, the method comprising the steps of:
determining if a service guide mode has been set;
transmitting a request for a bi-directional channel connection to a broadcasting guide information transmitting apparatus if the service guide mode has been set;
transmitting a request for service guide information through a connected bi-directional channel;
receiving the service guide information generated based on user information from the broadcasting guide information transmitting apparatus; and
outputting the received service guide information to the user.

15. The method as recited in claim 14, wherein the service guide mode comprises at least one of an entire service guide mode and an available service guide mode.

16. The method as claimed in claim 15, wherein the user information is provided by the user.

17. The method as claimed in claim 15, wherein the user information is received from the mobile terminal.

18. The method as claimed in claim 15, wherein the user information is stored in a smart card of the mobile terminal.

19. The method as claimed in claim 18, wherein the smart card comprises a SIM or a USIM.

20. The method as claimed in one of claims 14 to 19, wherein the service guide information is generated based on all or part of the user information.

21. The method as claimed in one of claims 14 to 19, wherein the service guide information is generated according to at least one of a particular term, a particular genre and particular actor information.
